# EUROPÄISCHE PATENTSCHRIFT

(11) **EP 0 605 813 B1**
(45) Veröffentlichungstag und Bekanntmachung des Hinweises auf die Patenterteilung: **25.03.1998**
(21) Anmeldenummer: 93120056.2
(22) Anmeldetag: 13.12.1993
(51) Int. Cl.: C09D 17/00, D06P 1/52, C09B 67/00

(54) **Kationische Pigmentbindemittel**
Cationic pigment binder
Liant de pigments cationique

(30) Priorität: 24.12.1992 DE 4244006
(43) Veröffentlichungstag der Anmeldung: 13.07.1994
(73) Patentinhaber: BAYER AG, 51368 Leverkusen (DE)
(72) Erfinder: Probst, Joachim Dr., D-51375 Leverkusen (DE); Novotny, Fritz, D-51467 Bergisch Gladbach (DE); Träubel, Harro Dr., D-51373 Leverkusen (DE); Heiliger, Ludger Dr., D-51373 Leverkusen (DE)

(56) Entgegenhaltungen:
- EP-A- 0 022 746
- DE-A- 3 730 781
- DATABASE WPI Week 9248, Derwent Publications Ltd., London, GB; AN 92-394171 & JP-A-4 293 058 (RICOH KK) 16. Oktober 1992
- DATABASE WPI Week 9144, Derwent Publications Ltd., London, GB; AN 91-320582 & JP-A-3 213 136 (TOA GOSEI CHEM IND LTD) 18. September 1991
- DATABASE WPI Week 9133, Derwent Publications Ltd., London, GB; AN 91-242343 & JP-A-3 157 466 (DAINICHISEIKA COLOR CHEM) 5. Juli 1991
- DATABASE WPI Week 9009, Derwent Publications Ltd., London, GB; AN 90-063685 & JP-A-2 017 155 (TOA GOSEI CHEM IND LTD) 22. Januar 1990
- DATABASE WPI Week 7811, Derwent Publications Ltd., London, GB; AN 78-20849A & JP-A-50 113 536 (HONNY CHEMICALS KK) 5. September 1975

## Beschreibung

Die Erfindung betrifft in wäßrigen Systemen anwendbare kationische Bindemittel für Pigmente für die Pigmentierung von Leder.

Die Färbung von Leder mit Farbstoffen führt oft zu Mängeln, wie z.B. schlechte Lichtechtheit oder mangelhafte Anfärbung von Narben. Verwendet man zur Färbung von Leder Pigmente, erhält man oft eine ungleichmäßige Pigmentierung:

Die Pigmente lagern sich bevorzugt auf der Fleischseite und an offenen Narbenbeschädigungen des Leders ab. Die Poren (an den Haarwurzeln) bleiben oft ungefärbt. Für viele Lederarten, z.B. Polsterleder, Bekleidungsleder oder spezielle Schuhoberleder, wird jedoch eine Durchfärbung verlangt.

In diesem Zusammenhang ist wichtig, daß die Pigmentdispersion so stabil ist, daß die Pigmente sich gleichmäßig in und auf dem Leder verteilen können; fällt das Pigment dagegen beim Kontakt der Dispersion mit der Lederoberfläche aus, erhält man - über den Lederquerschnitt gesehen - eine unbefriedigende Pigmentverteilung. Darüber hinaus führt eine überhöhte Pigmentanreicherung auf der Lederoberfläche zu einer verminderten Haftung des Finishs.

Aus der EP-A 344 555 ist ein Verfahren zum Färben von Leder mit Pigmenten aus wäßriger Flotte in Gegenwart eines oxalkylierten Polyamins mit mindestens 20 C-Atomen bekannt. Die in der EP-A 344 555 empfohlenen oxalkylierten Polyamine lassen sich schlecht auf Leder fixieren und gelangen somit zum Teil mit den Waschflotten in das Abwasser.

Es wurde nun ein Verfahren zum Färben von Leder mit Pigmenten aus wäßriger Flotte gefunden, das den bislang bekannten Färbeverfahren überlegen ist. Das Wesentliche ist dabei die Verwendung eines kationischen Polymerisats als Pigmentbindemittel, das neutralisierte tertiäre Aminogruppen und/oder quarternäre Ammoniumgruppen enthält.

Gegenstand der Erfindung ist also die Verwendung von 10-50 gew.-%ig wäßrigen Lösungen und/oder (in Wasser dispergierten) Dispersionen mit einer Viskosität, gemessen bei 23°C, von 20 bis 10.000 mPa.s von kationischen Polymerisaten, wobei die kationischen Polymerisate erhältlich sind durch Polymerisation von;
a) 5 bis 60, vorzugsweise 10 bis 50 Gew.-% N,N-C₁-C₄-Dialkylamino-C₁-C₆-alkylacrylat und/ oder -methacrylat und/oder N,N-C₁-C₄-Dialkylamino-C₁-C₆-alkylacryl-und/oder -methacrylamiden, wie z.B. N,N-Dimethylamino-ethyl(meth)acrylat, N,N-Diethylaminoethyl(meth)acrylat, N,N-Dimethylaminopropyl(meth)acrylamid,
b) 0 bis 90, vorzugsweise 5 bis 60 Gew.-% Amino- und Ammoniumgruppen-freien ethylenisch ungesättigten Verbindungen, deren Homopolymerisate (bei einem als Zahlenmittel bestimmten Molekulargewicht von mindestens 10.000) Glasübergangstemperaturen von mindestens 90°C besitzen, wie z.B. Methylmethacrylat und/oder Acryl- und/oder Methacrylnitril und/oder Styrol und/oder α-Methylstyrol und/oder p-Methylstyrol und/oder p-Chlorstyrol,
c) 0 bis 70, vorzugsweise 0 bis 50 Gew.-% Amino- und Ammoniumgruppen-freien ethylenisch ungesättigten Verbindungen, deren Homopolymerisate (bei einem als Zahlenmittel bestimmten Molekulargewicht von mindestens 10.000) Glasübergangstemperaturen unter 90°C, vorzugsweise unter 50°C besitzen, wie z.B. Acrylsäure- und/oder Methacrylsäure-C₁-C₂₂-alkylester mit Ausnahme von Methylmethacrylat, und
d) 0 bis 40, vorzugsweise 3 bis 30 Gew.-% Amino- und Ammoniumgruppen-freien monoethylenisch ungesättigten Verbindungen mit einem mittleren Molekulargewicht (Zahlenmittel) von 400 bis 6.000 und einer Wasserlöslichkeit unter 1 g/l bei 25°C,
wobei sich die Prozentangaben auf die Summe der Komponenten a) bis d) beziehen, und anschließende Neutralisation und/oder Quaternisierung, als Pigmentbindemittel.

Besonders bevorzugt werden Polymerisate verwendet, die aus
I. 10 bis 60, vorzugsweise 10 bis 50 Gew.-% Komponente
   a) und
      40 bis 90, vorzugsweise 50 bis 90 Gew.-% Komponente
   b) oder
II. 5 bis 60, vorzugsweise 10 bis 50 Gew.-% Komponente
   a),
      5 bis 70, vorzugsweise 10 bis 60 Gew.-% Komponente
   b) und
      5 bis 50, vorzugsweise 5 bis 40 Gew.-% Komponente
   c), wobei die Monomeren c) mindestens 8 C-Atome im Alkoholrest enthalten, oder
III. 5 bis 60, vorzugsweise 10 bis 50 Gew.-% Komponente
   a),
      10 bis 70, vorzugsweise 10 bis 60 Gew.-% Komponente
   b) und
      3 bis 30 Gew.-% Komponente d)
erhältlich sind.

Die Aminogruppen der Monomeren a) ermöglichen nach ihrer Neutralisation bzw. Quaternisierung im fertigen Polymerisat dessen Dispergierfähigkeit in Wasser. Bei Verwendung von weniger als 10 Gew.-% dieser Komponenten, bezogen auf Gesamtmonomere, resultieren wäßrige Dispersionen mit einem relativ geringen Anteil an molekulardispers gelöstem Polymerisat. Höhere Anteile der Komponente a) führen zu steigenden Mengen an molekulardispers gelöstem Polymerisat, bis schließlich bei Anteilen über ca. 25 Gew.-% die kolloiddispers gelösten Polymerisatanteile ganz verschwinden.

Die Monomeren b) machen das Polymerisat hart, die Monomeren c) elastisch.

Die Verbindungen d) besitzen 1 endständige C=C-Doppelbindung pro Molekül. Polymerisate, die eingebaute Reste der Verbindungen c) oder d) enthalten, sind besonders bevorzugt. Die Kombination von hydrophilem Kettenrückgrat und hydrophoben Seitenketten ergibt tensidähnliche Eigenschaften, die bei der Copolymerisation der Verbindungen d) von diesem auf das erfindungsgemäß zu verwendende Polymerisat übertragen werden.

Für die Herstellung der Verbindungen d) bieten sich mehrere Methoden an, beispielsweise
1. die radikalische Polymerisation von Vinylmonomeren, wie z.B. Styrol, Acrylaten, Methacrylaten etc. in Gegenwart von Mercapto-C₂-C₆-carbonsäure, vorzugsweise α-Mercaptoessigsäure, als Kettenüberträger und Umsetzung der resultierenden endständigen Carboxylgruppen mit Verbindungen, die sowohl eine reaktionsfähige Epoxygruppe als auch eine ethylenisch ungesättigte Gruppe enthalten, wie z.B. Glycidylacrylat, -methacrylat oder Allylglycidylether (Literatur: T. Corner, Adv. Polym. Sci. 62, S. 95 - 142 (1984) und Y. Tsukahara u.a., J. Polym. Sci. Part A: Polym. Chem. 27, S. 1.099 - 1.114 (1989));
2. die radikalische Polymerisation von Methacrylsäure-C₁-C₆-alkylestern in Gegenwart von Cobaltkomplexen, vorzugsweise des Diacetyldioxims oder auf Porphinbasis, als regenerierbare Kettenüberträger (Literatur: N,S. Enikolopyan u,a., J. Polym. Sci., Polym. Chem. Ed. 19, S. 879 - 889 (1981); R.A. Sanayei u. K.F. O'Driscoll, J. Macromol. Sci. Chem. A26(8), S. 1,137 - 1.149 (1989) u. A.A. Gridnev, Polymer Sci. UdSSR 31 (10) S. 2.369 - 2.376 (1989));
3. die kationische Polyaddition von 6-Caprolacton in Gegenwart von Hydroxylgruppen-haltigen ethylenisch ungesättigten Verbindungen, vorzugsweise Hydroxy-C₂-C₃-alkylacrylat und -methacrylat, mit Hilfe von Katalysatoren (vorzugsweise Sulfonsäuren wie p-Toluolsulfonsäure, Methansulfonsäure etc.) (Literatur: R.H. Young, M. Matzner, C.A. Pilato: "Ring-Opening Polymerizations: Mechanism of Polymerization of ε-Caprolacton", Kap. 11 in "Ring-Opening Polymerization", T. Saegusa u. E. Goethals (Ed.), Am. Chem. Soc., Washington, D.C., 1977);
4. die Polykondensation von Hydroxy-C₆-C₂₄-carbonsäuren (z.B. 12-Hydroxystearinsäure), Umsetzung der endständigen Hydroxylgruppen mit C₁-C₂₄-Carbonsäuren und Umsetzung der endständigen Carboxylgruppen mit Verbindungen, die sowohl eine reaktionsfähige Epoxygruppe als auch eine ethylenisch ungesättigte Gruppe enthalten, wie z.B. Glycidylacrylat, -methacrylat oder Allylglycidylether (Literatur: K.E.J. Barrett, Dispersion Polymerization in Organic Media (1975), J. Wiley & Sons, London, New York, Sydney, Toronto).

Die Polymerisate können durch Polymerisation der Verbindungen a) bis c) bzw, d) nach üblichen Verfahren, insbesondere durch radikalisch initiierte Polymerisation in Masse, Lösung, wäßriger Emulsion oder Suspension, hergestellt werden.

Vorzugsweise erfolgt die Herstellung der Polymerisate in organischer Lösung. Möglich sind kontinuierliche und diskontinuierliche Polymerisationsverfahren. Von den diskontinuierlichen Verfahren sind das Batch- und vorzugsweise das Zulaufverfahren zu nennen. Nach dem Zulaufverfahren wird das organische Lösungsmittel allein oder mit einem Teil des Monomergemisches vorgelegt, auf die Polymerisationstemperatur erwärmt, die Polymerisation im Fall einer Monomervorlage radikalisch gestartet und das restliche Monomergemisch bzw. das gesamte Monomergemisch zusammen mit einem Initiatorgemisch im Verlauf von 1 bis 10 Stunden, vorzugsweise 2 bis 6 Stunden, zudosiert. Gegebenenfalls wird anschließend noch nachaktiviert, um die Polymerisation bis zu einem Umsatz von mindestens 99 % zu führen.

Hierbei ist es oft von Vorteil, einen größeren Anteil der Verbindungen d) vorzulegen, da ihre Reaktivität aufgrund sterischer Behinderung oder Unverträglichkeit mit der wachsenden Polymerkette vermindert sein kann. Als organische Lösungsmittel kommen beispielsweise Aromaten, wie Benzol, Toluol, Xylol, Chlorbenzol, Ester wie Ethylacetat, Butylacetat, Methylglykolacetat, Ethylglykolacetat, Methoxypropylacetat, Ethoxypropylacetat, Propylenglykoldiacetat, Ether wie Butylglykol, Tetrahydrofuran, Dioxan, Ethylglykolether, Ketone wie Aceton, Methylethylketon, Methylisobutylketon, Halogenalkane wie Methylenchlorid oder Trichlormonofluorethan in Betracht.

Die durch Radikale initiierte Polymerisation kann durch Initiatoren ausgelöst werden, deren Halbwertszeiten des Radikalzerfalls bei 80 bis 180°C zwischen 0,01 und 400 min. liegen. Im allgemeinen erfolgt die Reaktion im genannten Temperaturbereich, vorzugsweise zwischen 100 und 160°C, unter einem Druck von 1 bis 20 bar, wobei sich die genaue Polymerisationstemperatur nach der Art des Initiators richtet.

Die Initiatoren können in Mengen von 0,05 bis 6 Gew.-%, bezogen auf die Gesamtmenge an Monomeren, eingesetzt werden. Bevorzugte Initiatoren sind z.B. aliphatische Azoverbindungen wie Azoisobutyronitril sowie Peroxide, wie z.B. Dibenzoylperoxid, t-Butylperpivalat, t-Butyl-2-ethylperhexanoat, t-Butylperbenzoat, t-Butylhydroperoxid, Di-t-butylperoxid, Cumolhydroperoxid sowie Dicyclohexyl-und Dibenzylperoxydicarbonat.

Zur Regelung des Molekulargewichts der Polymerisate können übliche Regler eingesetzt werden, wie z.B. n-Dodecylmercaptan, t-Dodecylmercaptan, Diisopropylxanthogendisulfid, Di(methylentrimethylolpropan)xanthogendisulfid und Thioglykol. Sie können in Mengen von höchstens 3 Gew.-%, bezogen auf die Gesamtmenge an Monomeren, zugegeben werden. Nach beendeter Polymerisation werden die Polymerisate in eine wäßrige Lösung bzw. Dispersion überführt. Hierzu wird die organische Polymerisatlösung in eine meist vorgewärmte Wasserphase eingeleitet und gleichzeitig das organische Lösemittel destillativ, im allgemeinen unter vermindertem Druck, entfernt. Zum Erreichen einer guten Wasserlöslichkeit bzw. -dispergierbarkeit kann der Wasserphase ein Neutralisationsmittel, wie z.B. anorganische oder organische Säure, zugesetzt werden, Als anorganische Säuren seien beispielhaft Salzsäure, Schwefelsäure, Salpetersäure und Phosphorsäure genannt. Als organische Säuren kommen beispielsweise Ameisensäure, Essigsäure, Milchsäure, Fumarsäure, Maleinsäure, Weinsäure, Oxalsäure in Betracht. Besonders bevorzugt sind Ameisensäure und Essigsäure.

Quaternierung kann mit Hilfe von Quaternierungsmitteln entweder in der organischen Phase oder in der wäßrigen Phase durchgeführt werden. Als Quaternierungsmittel kommen beispielsweise (Ar)alkylhalogenide, Schwefelsäureester, Epihalogenhydrine und Monoepoxide in Betracht, insbesondere Methylchlorid, Methyljodid, Dimethylsulfat, Benzylchlorid, Chloressigsäureethylester, Bromacetamid, Propylenoxid, 1,2-Butylenoxid sowie Epichlorhydrin und Epibromhydrin. Bei nicht vollständiger Quaternierung werden die restlichen Aminogruppen mit zusätzlicher Säure neutralisiert und das Polymerisat wäßrig gelöst bzw. dispergiert. Die Polymerisate kommen in Form von 10 bis 50, vorzugsweise 15 bis 40 gew.-%igen wäßrigen Lösungen und/oder Dispersionen zum Einsatz, die im allgemeinen eine Viskosität von 10 bis 10⁵, vorzugsweise 20 bis 10.000 mPa·s/23°C und pH-Werte von 2 bis 8, vorzugsweise 4 bis 6 aufweisen.

Die Pigmente lassen sich mit Hilfe der erfindungsgemäß zu verwendenden Polymerisate in einfacher Weise durch Mischen der Komponenten - beispielsweise mit Hilfe eines Dissolvers, einer Rotor-Statormühle, einer Perl- oder Kugelmühle in kürzester Zeit dispergieren. Die Teilchengröße der abgemahlenen Pigmente und die Farbausbeute sind sehr gut.

Die Pigmente, die in die erfindungsgemäß zu verwendenden Polymerisate eingearbeitet werden können, unterliegen praktisch keiner Beschränkung; sie können anorganischer oder organischer Natur sein. Geeignete organische Pigmente umfassen z.B. solche der Azo-, Anthrachinon-, Azoporphin-, Thioindigo-, Dioxazin-, Naphthalintetracarbonsäure- oder Perylentetracarbonsäurereihe, Phthalocyanine sowie Calcium-, Magnesium- oder Aluminiumlacke von Sulfonsäure- und/oder Carbonsäuregruppen enthaltenden Farbstoffen, von denen eine große Zahl beispielsweise aus Colour-Index, 2. Auflage, bekannt sind. Geeignete anorganische Pigmente umfassen z.B. Zinksulfide, Titandioxide, Ultramarin, Eisenoxide, Nickel- und Chromverbindungen und Ruß. Selbstverständlich könnten auch Cadmiumsulfid, Bleichromate oder andere, wegen ihrer umweltrelevanten Eigenschaften weniger geeignete Pigmente eingesetzt werden. Auch gefällte Farbstoffe sind prinzipiell geeignet. Die Leder können mit Farbstoffen - vor ihrer Behandlung mit Pigmenten - vorgefärbt oder nach der Pigmentbehandlung mit Pigmenten und Farbstoffen überfärbt werden.

Pigmentzubereitungen, die die erfindungsgemäß zu verwendenden Polymerisate enthalten, können zum Färben sowohl von Wet blues als auch von Crustledern und nachgegerbten Ledern verwendet werden. Das Polymerisat dient als Carrier für das Pigment und als Fixiermittel, so daß auf fremde Fixierung verzichtet werden kann. Die gute Dispergierwirkung der erfindungsgemäß zu verwendenden Polymerisate ermöglicht auch die gemeinsame Verwendung von Pigmenten unterschiedlicher Dichte.

Eine Färbung mit Pigmenten, die in den erfindungsgemäß zu verwendenden Polymerisaten dispergiert sind, kann beispielsweise folgendermaßen erfolgen:

Wet Blue, nachgegerbtes oder aufbroschiertes Crust wird auf einen pH-Wert von ca. 4 (zweckmäßigerweise in 200 bis 400 Gew.-% Wasser von 35 bis 45°C) gebracht. Dann fügt man bei Wet blue je nach gewünschter Farbstärke 0,1 bis 20 Gew.-% (vorzugsweise 0,5 bis 8 Gew.-%) Pigment und Polymerisat zu und läßt 30 bis 60 Minuten walken. Nach wenigen Minuten beginnt sich die Flotte zu klären; nach spätestens 30 Minuten hat man eine klare Restflotte und egal gefärbte Leder, die sich noch überfärben lassen. Im einzelnen werden Wet blue (worunter auch Chromvelours verstanden werden) und Crust wie folgt gefärbt:

### Wet blue

Nach kurzem Waschen werden in neuer Flotte bei einer Temperatur von 20 bis 60°C, vorzugsweise 30 bis 50°C und einem pH-Wert von 3,5 bis 4,5, Pigment und Polymerisat zugegeben. Nach einer Laufzeit von 30 bis 60 Minuten wird 1 bis 3 Gew.-% handelsüblicher Chromgerbstoff pulverförmig zugegeben und 30 bis 60 Minuten weiter gewalkt, Die Flotte ist dann praktisch klar. Danach wird nach üblichen Verfahren neutralisiert, nachgegerbt, evtl. überfärbt und gefettet, und getrocknet.

### Crustleder

Nach einer praxisüblichen Broschur wird gut gespült. In neuem Bad bei einer Temperatur von 30 bis 60°C werden 0,5 bis 2 Gew.-% anionischer handelsüblicher Fettlicker zugesetzt und 30 bis 60 Minuten gewalkt. Danach wird mit Ameisensäure der pH-Wert auf einen Wert von 3,5 bis 4,5 gesenkt. Vor der Zugabe von Pigment und Polymerisat erweist sich eine Behandlung mit 0,5 bis 2 Gew.-% eines kationischen Hilfsmittels für 5 bis 15 Minuten als besonders günstig. Danach werden Pigment und Polymerisat zugegeben und weitere 30 bis 60 Minuten gewalkt. Die Flotte ist dann praktisch klar. Danach wird evtl. abgesäuert und gespült.

Es ist prinzipiell möglich, vegetabil gegerbte Leder mit den erfindungsgemäßen Pigmentpräparationen zu färben; die Färbemethode muß allerdings auf den Vegetabilledertyp abgestimmt sein.

Das Leder wird der Flotte entnommen und betriebsüblich fertiggestellt. Eine zusätzliche Färbung mit löslichen anionischen Farbstoffen vor oder nach der Pigmentierung ist möglich.

Die physikalischen Echtheiten wie Schweißechtheit, Licht- und Migrationsechtheit sind hervorragend. Das Verfahren ermöglicht eine sehr gute Abdeckung der normalerweise, natürlich oder durch die Konservierung, entstandenen Schäden an der Rohhaut.

Die Beispiele 1 bis 13 beschreiben die Herstellung des Polymerisats, Beispiele P1 bis P17 die der Pigmentzubereitungen und A1 bis A4 die Anwendungen.

Die Prozentangaben der folgenden Beispiele beziehen sich auf das Gewicht; Verhältnisse sind Gewichtsverhältnisse.

### Beispiele

### Ausgangsprodukte:

### Verbindung d1)

In einem 2 l-Kolben werden 1.140 g (10 Mol) ε-Caprolacton und 65 g (0,56 Mol) destilliertes Hydroxyethylmethacrylat vorgelegt und mit 200 ppm Jonol stabilisiert. Zu dieser Mischung werden 1,2 g (0,1 Gew.-%) p-Toluolsulfonsäure (mit 1 Mol Kristallwasser) zugegeben und die Polymerisation 22 Stunden bei 50°C durchgeführt. Der Verlauf der Reaktion läßt sich mit Hilfe des Brechungsindex verfolgen. Danach stoppt man mit 6,3 ml einer 1 n Natriummethylatlösung ab und gießt die Reaktionsmischung auf ein Blech. Man erhält ein weißes, wachsartiges Produkt.

### Verbindung d2)

11 g Stearinsäure, 209 g 12-Hydroxystearinsäure und 50 g Xylol werden vorgelegt, danach wird Stickstoff übergeleitet und auf 100°C erwärmt. Es wird solange gerührt, bis eine homogene Lösung entstanden ist. Danach wird eine Lösung von 0,15 g Titantetrabutylat in 5 g Xylol zugegeben und danach unter Erhöhen der Reaktionstemperatur bis auf ca. 190°C am Wasserabscheider 17 ml Reaktionswasser entfernt. Die eingedampfte Polyesterprobe weist ein Molekulargewicht Mn von 1.200 g·mol⁻¹, eine OH-Zahl von 1,5 mg KOH/g und eine Säurezahl von 43 mg KOH/g auf. 200 g des so erhaltenen Polyesters werden auf 50°C erwärmt und mit 17,4 g Glycidylmethacrylat, 300 mg Hydrochinon und 0,3 g N,N-Dimethylaminododecan in 40 g Xylol vereinigt. Danach wird auf 100°C erwärmt und 22 Stunden gerührt. Die Säurezahl ist danach auf einen Wert von 4,9 mg KOH/g abgefallen. Xylol wird destillativ bis zu einer Endkonzentration von ca. 75 % entfernt. Die Lösung wird abgekühlt und filtriert. Konzentration der Lösung: 75,8 %.

### Verbindung d3)

250 g n-Butylmethacrylat werden in einen 500 ml-Dreihalskolben eingefüllt, mit 50 mg 5, 10, 15, 20-Tetrakis(4-methoxyphenyl)-21H,23H-porphin-cobalt(II)-Komplex versetzt, dreimal evakuiert und mit Stickstoff belüftet. Danach wird auf 80°C erwärmt, bei Erreichen dieser Temperatur mit 1 g Azoisobutyronitril versetzt und ca. 10 Stunden bei 80°C gerührt. Die Rohlösung wird im Hochvakuum (0,1 mbar) bei 70°C von Restmonomeren befreit. Das mittels ¹H-NMR-Endgruppenanalyse ermittelte Molekulargewicht Mn liegt bei ca. 5.500 g mol⁻¹.

### Beispiel 1

In einem 40 l-Autoklaven werden 10.075 g Methylisobutylketon vorgelegt. Der Autoklav wird gründlich mit Stickstoff gespült und danach auf 75°C erwärmt. Bei dieser Temperatur werden eine Mischung von 4.187 g N,N-Dimethylaminoethylmethacrylat, 7.406 g Styrol und 4.508 g Acrylnitril und eine Lösung von 378 g Azoisobutyronitril in 3.978 g Methylisobutylketon innerhalb von 6 Stunden unter Luftausschluß zudosiert. Dann wird 1 Stunde nachgerührt und mit einer Lösung von 45 g Azoisobutyronitril in 567 g Methylisobutylketon nachaktiviert. Daraufhin wird ca. 8 Stunden bei 75°C gerührt. Nach Beendigung der Polymerisation werden 1.435 g Essigsäure zudosiert. Anschließend werden 1.155 g Propylenoxid in ca. 15 min. zudosiert und ca. 1 Stunde gerührt. Daraufhin werden weitere 1.739 g Essigsäure zugesetzt.

In einem 120 l-Autoklav werden ca. 63 - 64 l entionisiertes Wasser vorgelegt und auf ca. 60°C erwärmt. Anschließend wird der Inhalt des 40 l-Autoklaven in die wäßrige Vorlage gegeben und unter Rühren gelöst. Danach wird das Lösungsmittel Methylisobutylketon azeotrop bei vermindertem Druck abdestilliert.

Die Konzentration der wäßrigen Dispersion liegt bei 24,0 Gew.-%, der pH-Wert bei 4,2 und die bei 23°C gemessene Viskosität bei 100 bis 150 mPa·s (die wäßrige Dispersion ist strukturviskos!).

### Beispiele 2 bis 7

In einem 2 l-Rührkolben mit Gaseinlaß und -auslaß werden 200 g Methylisobutylketon (I in Tabelle 1) vorgelegt, danach wird Stickstoff übergeleitet und auf 70°C erwärmt. In 3 Stunden werden die Monomermischungen II (vergl. Tabelle 1) und die Initiatorlösung III gleichmäßig in die Vorlage zudosiert. Danach wird 2 Stunden gerührt und dann mit der Initiatorlösung IV nachaktiviert. Es wird 10 Stunden nachgerührt und anschließend mit V neutralisiert.

Anschließend werden in einem 4 l-Kolben 2.000 g entionisiertes Wasser (VI) vorgelegt, auf 60°C bis 70°C erwärmt, und der Inhalt des 2 1-Kolbens wird hiermit vereinigt. Unter vermindertem Druck (ca. 200 mbar) wird das organische Lösungsmittel abdestilliert. Die physikalisch-chemischen Daten der Polymerisatlösungen sind in Tabelle 1 aufgelistet.

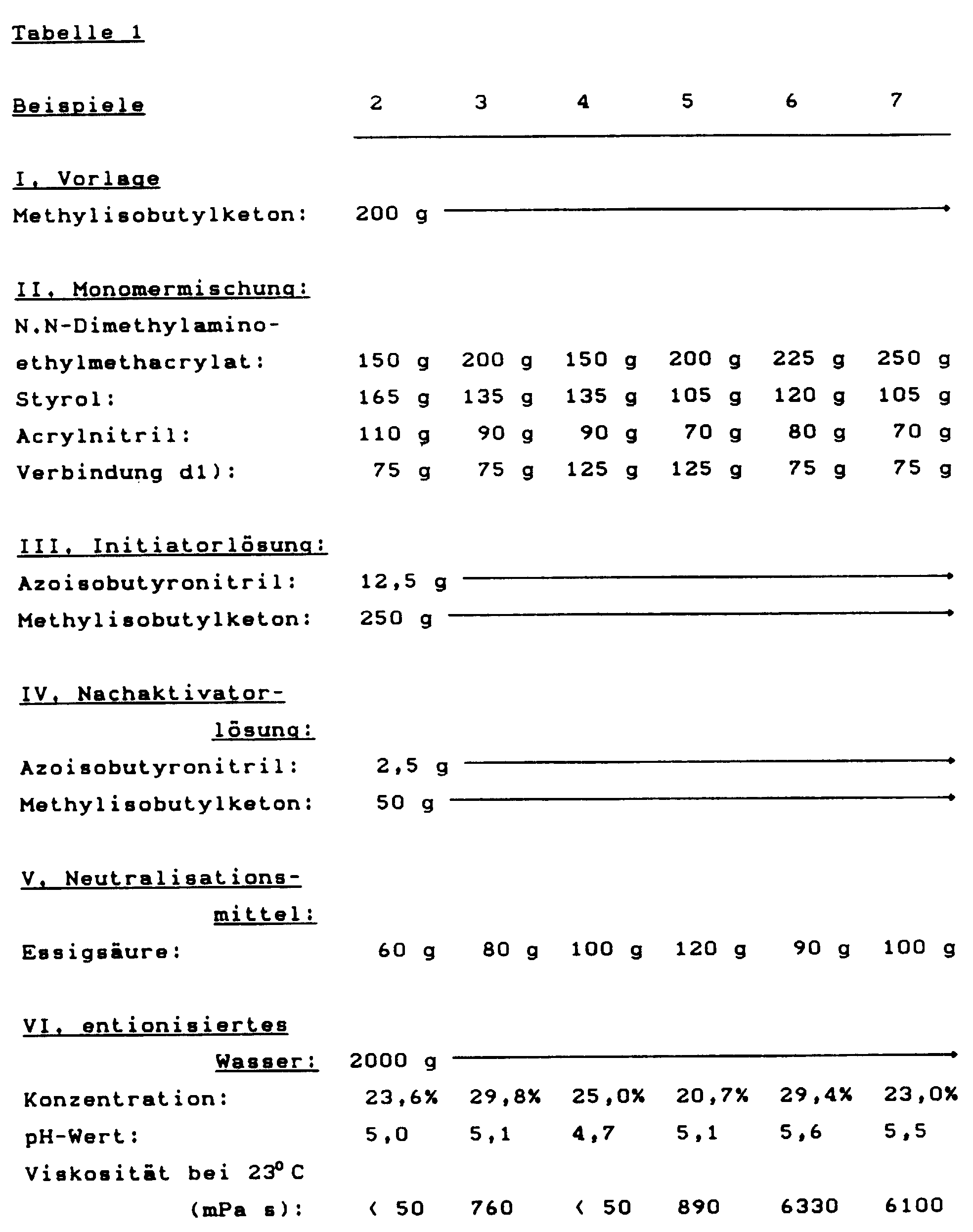

### Beispiele 8 und 9

In einem 2 l-Rührkolben mit Gaseinlaß und -auslaß werden 200 g Methylisobutylketon (I in Tabelle 2) vorgelegt, danach wird Stickstoff übergeleitet und auf 70°C erwärmt. In 2 Stunden werden die Monomermischungen II (vergl. Tabelle 2) und die Initiatorlösung III gleichmäßig in die Vorlage zudosiert. Dann wird 2 Stunden gerührt und anschließend mit Initiatorlösung IV nachaktiviert. Es wird 10 Stunden nachgerührt und anschließend mit V neutralisiert.

Anschließend werden in einem 4 1-Kolben ca. 2.000 g entionisiertes Wasser (VI) vorgelegt und auf 60°C bis 70°C erwärmt. Der Inhalt des 2 1-Kolbens wird hiermit vereinigt. Unter vermindertem Druck (ca. 200 mbar) wird das organische Lösungsmittel azeotrop abdestilliert. Die physikalisch-chemischen Daten der Polymerlösungen sind in Tabelle 2 aufgelistet.

**Tabelle 2**

| Beispiel | 8 | 9 |
|---|---|---|
| I. Vorlage | | |
| Methylisobutylketon | 200 g | 200 g |

| II. Monomermischung | | |
|---|---|---|
| N,N-Dimethylaminoethylmethacrylat | 150 g | 150 g |
| Styrol | 135 g | 165 g |
| Acrylnitril | 90 g | 110 g |
| Verbindung d2) | 125 g | 75 g |

| III. Initiatorlösung | | |
|---|---|---|
| Azoisobutyronitril | 12,5 g | 12,5 g |
| Methylisobutylketon | 250 g | 250 g |

| IV. Nachaktivatorlösung | | |
|---|---|---|
| Azoisobutyronitril | 2,5 g | 2,5 g |
| Methylisobutylketon | 50 g | 50 g |

| V. Neutralisationsmittel | | |
|---|---|---|
| Essigsäure | 100 g | 100 g |

| VI. entionisiertes Wasser | 2000 g | 2000 g |
|---|---|---|
| Konzentration | 19,8 % | 24,0 % |
| pH-Wert | 4,8 | 4,8 |
| Viskosität bei 23°C (mpa.s) | < 50 | 250 |

### Beispiele 10 und 11

In einem 1 l-Rührkolben mit Gaseinlaß und -auslaß wird Lösung I (vergl. Tabelle 3) vorgelegt, mit Stickstoff gespült und auf 70°C erhitzt. Danach wird Lösung II innerhalb von 3 Stunden zudosiert und 2 Stunden nachgerührt.

Anschließend wird die ketonische Lösung tropfenweise zur Mischung IV zudosiert und homogen vermischt, Danach wird Methylisobutylketon bei vermindertem Druck azeotrop abdestilliert (bei Temperaturen bis 100°C). Die trübe, wäßrige Lösung wird dann abgekühlt und filtriert. Die physikalisch-chemischen Daten sind in Tabelle 3 aufgelistet.

**Tabelle 3**

| Beispiel | 10 | 11 |
|---|---|---|
| I. Vorlage | | |
| Methylisobutylketon | 100 g | 100 g |
| Verbindung d3) | 37,5 g | 62,5 g |

| II. Monomermischung | | |
|---|---|---|
| N,N-Dimethylaminoethylmethacrylat | 100 g | 100 g |
| Styrol | 67,5 g | 52,5 g |
| Acrylnitril | 45 g | 35 g |
| Methylisobutylketon | 125 g | 125 g |
| Azoisobutyronitril | 6,25 g | 6,25 g |

| III. Nachaktivatorlösung | | |
|---|---|---|
| Azoisobutyronitril | 1,25 g | 1,25 g |
| Methylisobutylketon | 25 g | 25 g |

| IV. Lösung des Neutralisationsmittels | | |
|---|---|---|
| Essigsäure | 40 g | 60 g |
| entionisiertes Wasser | 1000 g | 1000 g |
| Konzentration | 20,6 % | 20,5 % |
| pH-Wert | 5,3 | 4,5 |

### Beispiele 12 und 13

In einem 2 l-Rührkolben mit Gaseinlaß und -auslaß wird Lösungsmittel I (vgl. Tabelle 4) vorgelegt, mit Stickstoff gespült und auf 70°C erhitzt. Danach werden die Monomermischung II und die Initiatorlösung III innerhalb von 2 Stunden gleichmäßig und gleichzeitig zudosiert und 2 Stunden nachgerührt.

Anschließend wird mit der Initiatorlösung IV nachaktiviert. Es wird 10 Stunden nachgerührt und danach das Neutralisationsmittel V zugegeben. Anschließend wird die organische Polymerlösung tropfenweise zur Wasserphase VI zudosiert und homogen vermischt. Danach wird das organische Lösungsmittel bei vermindertem Druck azeotrop abdestilliert. Die leicht trübe, wäßrige Lösung wird dann abgekühlt und filtriert. Die physikalisch-chemischen Daten der wäßrigen Polymerlösungen sind ebenfalls in Tabelle 4 aufgelistet.

**Tabelle 4**

| Beispiel | 12 | 13 |
|---|---|---|
| I. Vorlage | | |
| Methylisobutylketon | 200 g | - |
| Toluol | - | 200 g |

| II. Monomermischung | | |
|---|---|---|
| N,N-Dimethylaminoethylmethacrylat | 150 g | 150 g |
| technisches Gemisch aus Stearyl- und Hexadecylmethacrylat | 150 g | 150 g |
| Styrol | 120 g | 100 g |
| Acrylnitril | 80 g | 100 g |

| III. Initiatorlösung | | |
|---|---|---|
| Azoisobutyronitril | 12,5 g | 12,5 g |
| Methylisobutylketon | 50 g | - |
| Toluol | - | 50 g |

| IV. Nachaktivatorlösung | | |
|---|---|---|
| Azoisobutyronitril | 2,5 g | 2,5 g |
| Methylisobutylketon | 50 g | - |
| Toluol | - | 50 g |

| V. Neutralisationsmittel | | |
|---|---|---|
| Essigsäure | 100 g | 100 g |

| VI. entionisiertes Wasser | 2000 g | 2000 g |
|---|---|---|
| Konzentration | 25,9 % | 25,2 % |
| pH-Wert | 4,7 | 4,7 |
| Viskosität bei RT (mPa.s) | < 100 | < 100 |

### Vergleichsbeispiele V1 und V2

In einem 2 l-Rührkolben mit Gaseinlaß und -auslaß wird Lösungsmittel I (vgl. Tabelle 5) vorgelegt, mit Stickstoff gespült und auf 70°C erhitzt. Danach werden die Monomermischung II und die Initiatorlösung III innerhalb von 2 Stunden gleichmäßig und gleichzeitig zudosiert und 2 Stunden nachgerührt.

Dann wird mit der Initiatorlösung IV nachaktiviert und 10 Stunden nachgerührt. Danach wird das Neutralisationsmittel V zugegeben. Anschließend wird die organische Polymerlösung tropfenweise zur Wasserphase VI zudosiert und homogen vermischt. Danach wird das organische Lösungsmittel bei vermindertem Druck azeotrop abdestilliert. Die etwas trübe, wäßrige Lösung wird dann abgekühlt und filtriert. Die physikalisch-chemischen Daten sind ebenfalls in Tabelle 5 aufgelistet.

**Tabelle 5**

| Vergleichsbeispiel | V1 | V2 |
|---|---|---|
| I. Vorlage | | |
| Methylisobutylketon | 200 g | 200 g |

| II. Monomermischung | | |
|---|---|---|
| N,N-Dimethylaminoethylmethacrylat | 325 g | 350 g |
| Styrol | 175 g | 150 g |

| III. Initiatorlösung | | |
|---|---|---|
| Azoisobutyronitril | 12,5 g | 12,5 g |
| Methylisobutylketon | 250 g | 250 g |

| IV. Nachaktivatorlösung | | |
|---|---|---|
| Azoisobutyronitril | 2,5 g | 2,5 g |
| Methylisobutylketon | 50 g | 50 g |

| V. Neutralisationsmittel | | |
|---|---|---|
| Essigsäure | 186 g | 201 g |

| VI. entionisiertes Wasser | 2000 g | 2000 g |
|---|---|---|
| Konzentration | 21,0 % | 20,2 % |
| pH-Wert | 4,9 | 4,9 |
| Viskosität bei RT (mPa.s) | < 50 | < 50 |

### Herstellung der Pigmentzubereitungen

### Verwendete Hilfsmittel:

- ®Shellsol TD: ist eine aliphatische Kohlenwasserstoffmischung (Sdp. 170-190°C) (Deutsche Shell Chemie GmbH, D-6236 Eschenbach).
- ®Elftex 415: Rußpigment (Cabot GmbH, D-6450 Hanau).
- ®CHROMOSAL B: 33 % basisches Chromsulfat (Bayer AG, LEV)
- ®Lipsol ES: Fettungsmittel (Schill & Seilacher, Böblingen).
- ®Coripol MB: anionisches Fettungsmittel (Stockhausen, Krefeld)
- ®RETINGAN R4B-N: Harzgerbstoff (Bayer AG).
- ®BAYMOL A: Mischung nichtionischer Emulgatoren (Bayer AG).
- ®BLANCOROL RL: Chromsulfat-Syntan-Mischung mit neutralisierenden Eigenschaften (Bayer AG)
- ®LEVOTAN K: 55Xige wäßrige Oligourethanlösung (Bayer AG)
- ®Tetrapol SAF: Fettungsmittel (Stockhausen, Krefeld)
- ®Agitan 295: Entschäumer (Münzing Chemie GmbH, Heilbronn)
- ®Preventol R 50: Benzyldodecyldimethylammoniumchlorid, 50%ig in Wasser (Bayer AG)

### Beispiel P 1

400 g der nach Beispiel 1 hergestellten Dispersion werden in einem Gefäß vorgelegt. In die wäßrige Dispersion werden 100 g Dipropylenglykol, 30 g eines als Desinfektionsmittel dienenden kationischen Produktes (Benzyldodecyl-dimethyl-ammonium-chlorid), 200 g Pigment Brown 25 und 15 g ®Shellsol TD sowie 255 g Wasser vorgelegt. Man dispergiert 15 Minuten mit einem Dissolver bei ca. 8000 U/Min. und überführt die so hergestellte Dispersion in eine Perlmühle (1,5 mm Kugeldurchmesser). Nach 15 Minuten wird abgefüllt. Man erhält eine gleichmäßig dispergierte Pigmentzubereitung, die beim Aufstreichen auf Leder keine "Kometen" oder sonstige Unegalitäten aufweist.

Analog Beispiel P 1 wurden die in Tabelle 6 aufgeführten Pigmentzubereitungen hergestellt.

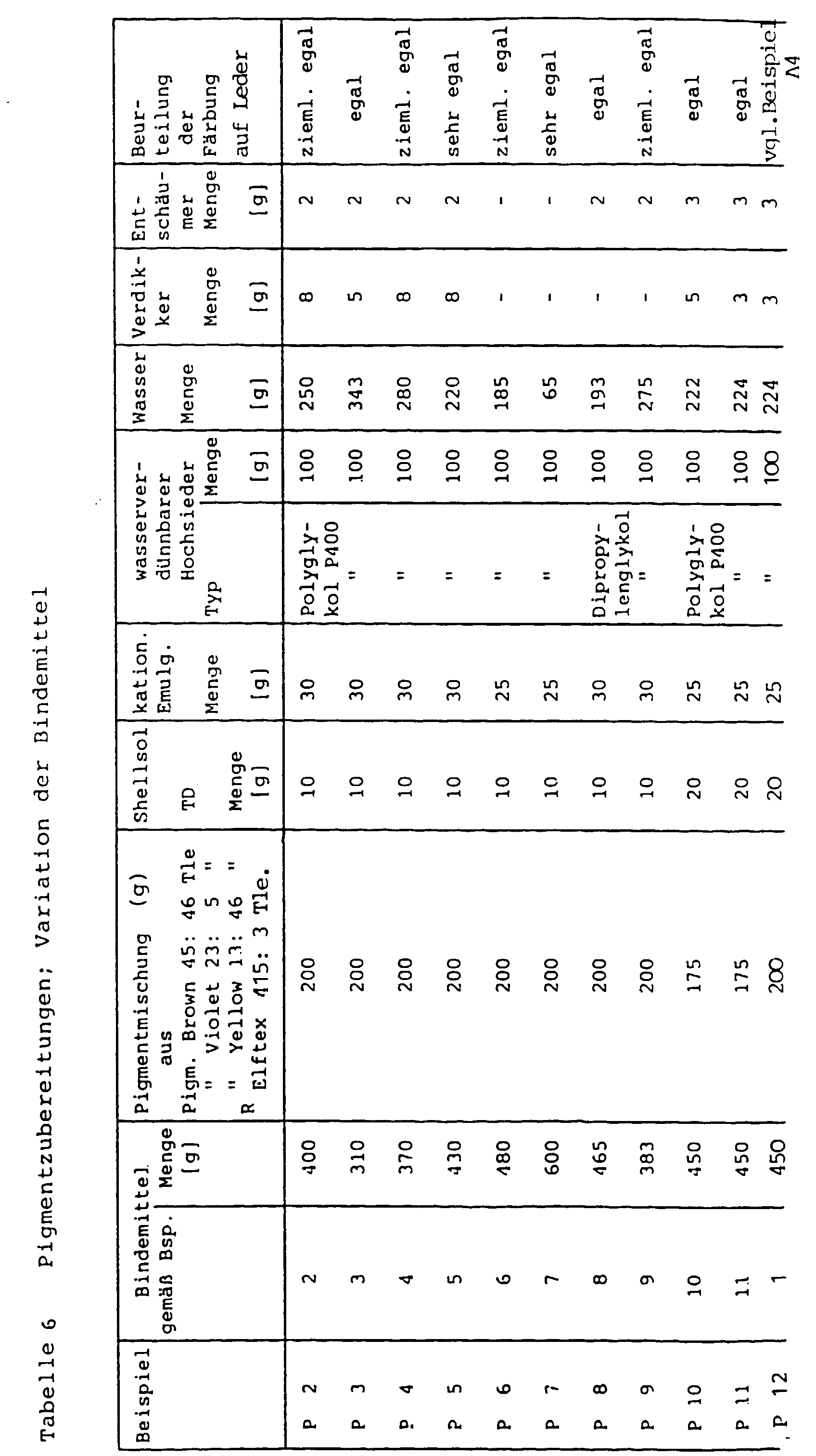

### Beispiele P 13 bis P 17

Analog den Beispielen P 1 bis P 12 wurden die in Tabelle 7 aufgeführten Pigmentzubereitungen unter vergleichbaren Bedingungen hergestellt. Man erkennt hierbei die gute bis hervorragende Egalität und Farbtiefe der auf Leder applizierten Zubereitungen auf Basis der erfindungsgemäßen Pigmentbindemittel. Im Gegensatz hierzu sind die auf den Vergleichsbeispielen 1 und 2 basierenden Pigmentzubereitungen deutlich schlechter geeignet.

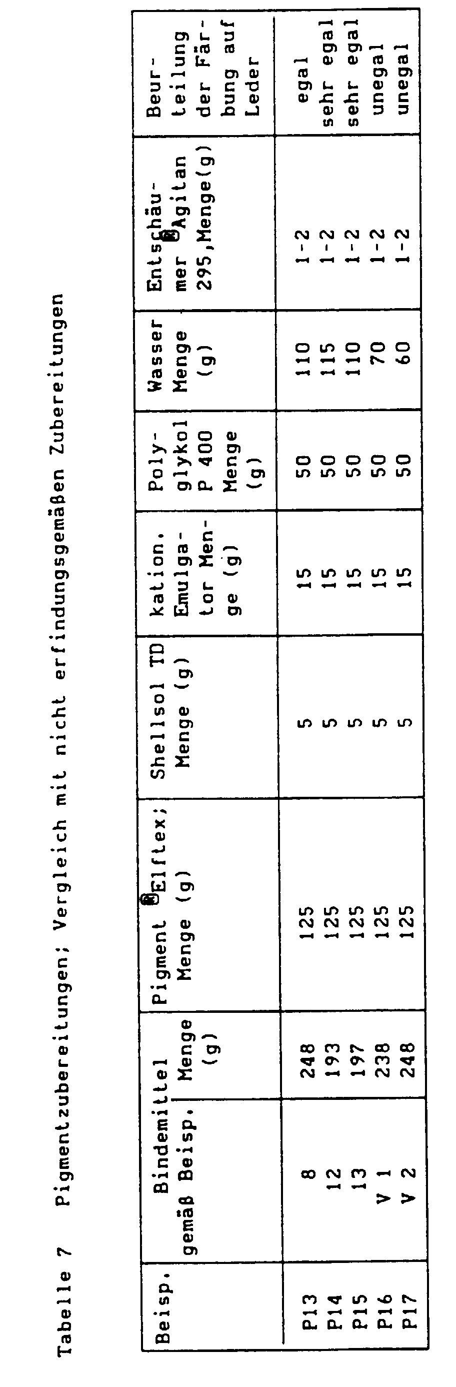

### Anwendungsbeispiele

### Beispiel A 1: Färbungen eines Wet blue

Ein für Möbelnappa geeigneter Wet blue (mit 2,8 % Cr₂O₃), Falzstärke 1,1 mm wird 15 Minuten mit 300 % Wasser bei 40°C gewaschen (pH-Wert 4,5). Dann fügt man erneut 200 % Wasser von 40°C zu, stellt den pH-Wert mit (1:10 verdünnter) Ameisensäure auf 4 und fügt nach 20 Minuten 2 % (der 1:5 verdünnten) Pigmentzubereitung P 1 zu. Nach 60 Minuten werden 2 % eines 33%igen basischen Chromsulfats (®CHROMOSAL B der Bayer AG) zugegeben; man läßt 30 Minuten laufen und beginnt die Neutralisation und die Nachgerbung nach herkömmlicher Arbeitsweise. In einem geänderten Ablauf wurde ein gleichermaßen gefärbtes Wet blue in der Nachgerbung nach bekannten Methoden mit 3 % von Acid Orange 51 überfärbt.

Sowohl das ausschließlich mit Pigment gefärbte Leder als auch das mit einem Farbstoff überfärbte Leder waren sehr gut durchgefärbt, natürliche Lederfehler hervorragend abgedeckt und die gesamte Farbe sehr gleichmäßig.

### Beispiel A 2

Beispiel A 1 wurde wiederholt mit 1 % Pigment. Die Zugabe von Chromgerbstoff erfolgte bereits nach 30 Minuten.

In diesem Falle war die Lederfarbe zwar gleichmäßig, aber etwas weniger stark, der Lederquerschnitt nicht ganz durchgefärbt.

### Beispiel A 3: Färbung eines Crustleders

Ein handelsüblich nachgegerbtes Crustleder von 1,4 mm Falzstärke wird in 1000 % Wasser von 40°C mit 2 % (1:10 verdünntem) Ammoniak und nach 10 Minuten mit 2 % eines emulgierenden Fettungsmittels (®Lipsol ES) 120 Minuten aufbroschiert. Man läßt die Flotte ab, spült und gibt 600 % Wasser von 40°C zu. Dann werden 2 % eines anionischen Fettlickers (®CORIPOL MB) und nach weiteren 30 bis 60 Minuten 1 bis 2 % (1:10 verdünnter) Ameisensäure zugefügt. Der pH-Wert soll dann 4 sein. Dann gibt man 1 % eines Harzgerbstoffs dazu (®Retingan R4 B-N) und nach 10 Minuten Laufzeit 2,5 % eines (1:5 mit Wasser verdünnten) Pigments nach Beispiel P10. (Nach ca. 40 Minuten Laufzeit kann mit 0,5 % (1:10 verdünnter) Ameisensäure auf pH 3,8 bis 4 abgesäuert werden; dieses Absäuern unterbleibt aber im allgemeinen.) Dann wird getrocknet und wie üblich fertiggestellt.

Die erhaltenen Leder sind gleichmäßig gefärbt; sie haben eine hervorragende Wassertropfenechtheit, Lichtechtheit und Migrationsbeständigkeit.

### Beispiel A 4: Färbung eines Velourleders

5 Wet blue Spalte (Dicke 1,7 mm) wurden in einem Faß mit 300 % Wasser (50°C) und 0,5 % BAYMOL A 30 Minuten gewaschen und die Flotte abgelassen.

Dann wurden 50 % Wasser (50°C) eingefüllt, 0,5 % Ameisensäure (die zuvor mit Wssser im Gewichtsverhältnis 1:10 verdünnt worden war) zugegeben und nach 5 Minuten Laufzeit 4 % Pigment P12 (Versuch A) zugefügt. Nach 90 Minuten wurden 2 % CHROMOSAL B, nach 15 Minuten 2 % BLANCOROL RC, nach 30 Minuten 4 % LEVOTAN K und nach weiteren 60 Minuten 1 % Natriumformiat zugefügt. Der pH-Wert der Flotte beträgt 4,1.

Dann wäscht man 10 Minuten mit Wasser von 40°C. 100 % Wasser (40°C) mit 2,2 % Natriumbicarbonat werden eingefüllt (pH = 6,4), nach 40 Minuten werden 7 % CORIPOL MB zusammen mit 0,5 % TETRAPOL SAF zugegeben und 60 Minuten laufengelassen (pH = 6,0). Die Flotte wird abgelassen.

Bei Versuch B werden 4 % Pigment wie oben zugefügt, nach 60 Minuten 2 % CORIPOL MB. Nach 30 Minuten wird mit 20°C warmen Wasser 5 Minuten lang gespült.

Die Leder werden auf den Bock gelegt, in Vakuum bei 70°C (3 Minuten) vorgetrocknet und schließlich hängend ausgetrocknet. Nach dem Klimatisieren werden sie gestollt, geschliffen und entstaubt.

Leder A war dunkelbraun; Leder B war schwarz.

Die Leder wurden auf Lichtechtheit (DIN 53.343 = IUF 402) geprüft. Sie waren über Blauskala 4 (Acid Blue 121) ohne Beeinträchtigung belichtbar. Die Schweißechtheit (IUF 426) und die Migrationsfestigkeit (IUF 442) waren hervorragend.

In einem weiteren Versuch (C) wurde Leder A nach der Fettung mit 3 % Acid Black 210 überfärbt und wie üblich fertiggestellt.

## Patentansprüche

1. Verwendung von 10-50 gew.-%ig wäßrigen Lösungen und/oder in Wasser dispergierten) Dispersionen mit einer Viskosität, gemessen bei 23°C, von 20 bis 10.000 mPa.s von kationischen Polymerisaten,
wobei die kationischen Polymerisate erhältlich sind durch
Polymerisation von
a) 5 bis 60 Gew.-% N.N-C₁-C₄-Dialkylamino-C₁-C₆-alkylacrylat und/oder -methacrylat und/oder N.N-C₁-C4-Dialkylamino-C₁-C6-alkylacryl- und/oder -methacrylamiden,
b) 0 bis 90 Gew.-% Amino- und Ammoniumgruppen-freien ethylenisch ungesättigten Verbindungen, deren Homopolymerisate (bei einem als Zahlenmittel bestimmten Molekulargewicht von mindestens 10.000) Glasübergangstemperaturen von mindestens 90°C besitzen,
c) 0 bis 70 Gew.-% Amino- und Ammoniumgruppen-freie ethylenisch ungesättigten Verbindungen, deren Homopolymerisate (bei einem als Zahlenmittel bestimmten Molekulargewicht von mindestens 10.000) Glasübergangstemperaturen unter 90°C besitzen, und
d) 0 bis 40 Gew.-% Amino- und Ammoniumgruppen-freie monoethylenisch ungesättigten Verbindungen mit einem mittleren Molekulargewicht (Zahlenmittel) von 400 bis 6.000 und einer Wasserlöslichkeit unter 1 g/l bei 25°C, wobei sich die Prozentangaben auf die Summe der Komponenten a) bis d) beziehen,
und anschließende Neutralisation und/oder Quaternisierung,
als Pigmentbindemittel.

2. Verwendung nach Anspruch 1, wonach die Polymerisate durch Polymerisation von
10 bis 50 Gew.-% a),
5 bis 60 Gew.-% b),
0 bis 50 Gew.-% c) und
3 bis 30 Gew.-% d) erhältlich sind.

3. Verwendung nach Anspruch 1, wonach die Polymerisate durch Polymerisation von 10 bis 60 Gew.-% a) und 40 bis 90 Gew.-% b) erhältlich sind.

4. Verwendung nach Anspruch 1, wonach die Polymerisate durch Polymerisation von
5 bis 60 Gew.-% a),
5 bis 70 Gew.-% b) und
5 bis 50 Gew.-% c), wobei die Monomeren c) mindestens 8 C-Atome im Alkoholrest enthalten,
erhältlich sind.

5. Verwendung nach Anspruch 1, wonach die Polymerisate durch Polymerisation von
5 bis 60 Gew.-% a),
10 bis 70 Gew.-% b) und
3 bis 30 Gew.-% d)
erhältlich sind.

## Claims

1. Use of 10 - 50% strength by weight aqueous solutions and/or (water-dispersed) dispersions having a viscosity, measured at 23°C, of 20 to 10,000 mPa·s, of cationic polmers, the cationic polyers being obtainable by
polymerisation of
a) 5 to 60 % by weight of N,N-C₁-C₄-dialkylamino-C₁-C₆-alkyl acrylate and/or N,N-C₁-C₄-dialkylamino-C₁-C₆-alkyl methacrylate and/or N,N-C₁-C₄-dialkylamino-C₁-C₆-alkylacryl- and/or -methacrylamides,
b) 0 to 90 % by weight of ethylenically unsaturated compounds which are free of amino and ammonium groups and whose homopolymers (at a number average molecular weight of at least 10,000) possess glass-transition temperatures of at least 90°C,
c) 0 to 70 % by weight of ethylenically unsatura-ted compounds which are free of amino and ammonium groups and whose homopolymers (at a number average molecular weight of at least 10,000) possess glass-transition temperatures below 90°C, and
d) 0 to 40 % by weight of monoethylenically unsaturated compounds which are free of amino and ammonium groups and have an average molecular weight (number average) of 400 to 6,000 and a water solubility below 1 g/l at 25°C, the percentages given being based on the sum of components a) to d),
followed by neutralisation and/or quaternisation,
as pigment binders.

2. Use according to Claim 1, wherefor the polymers are obtainable by polymerisation of
10 to 50 % by weight of a),
5 to 60 % by weight of b),
0 to 50 % by weight of c), and
3 to 30 % by weight of d).

3. Use according to Claim 1, wherefor the polymers are obtainable by polymerisation of 10 to 60 % by weight of a) and 40 to 90 % by weight of b).

4. Use according to Claim 1, wherefor the polymers are available by polymerisation of
5 to 60 % by weight of a),
5 to 70 % by weight of b), and
5 to 50 % by weight of c), monomers c) containing at least 8 C atoms in the alcohol radical.

5. Use according to Claim 1, wherefor the polymers are obtainable by polymerisation of
5 to 60 % by weight of a),
10 to 70 % by weight of b), and
3 to 30 % by weight of d).

## Revendications

1. Utilisation de solutions aqueuses et/ou de dispersions (dispersions dans l'eau), ayant une viscosité mesurée à 23°C de 20 à 10 000 mPa.s, à 10 - 50 % en masse de polymères cationiques, les polymères cationiques pouvant être obtenus par polymérisation de
a) 5 à 60 % en masse d'acrylate et/ou de méthacrylate de N,N-di(alkyl en C₁-C₄)amino(alkyle en C₁-C₆) et/ou de N,N-di(alkyl en C₁-C₄)amino(alkyl en C₁-C₆)acrylamides et/ou méthacrylamides,
b) 0 à 90 % en masse de composés à insaturation éthylénique ne contenant pas de groupes amino ni de groupes ammonium, dont les homopolymères (à une masse molaire moyenne en nombre d'au moins 10 000) ont des températures de transition vitreuse d'au moins 90°C,
c) 0 à 70 % en masse de composés à insaturation éthylénique ne contenant pas de groupes amino ni de groupes ammonium, dont les homopolymères (à une masse molaire moyenne en nombre d'au moins 10 000) ont des températures de transition vitreuse inférieures à 90°C, et
d) 0 à 40 % en masse de composés à une seule insaturation éthylénique ne contenant pas de groupes amino ni de groupes ammonium, ayant une masse molaire moyenne (moyenne en nombre) de 400 à 6 000 et une solubilité dans l'eau inférieure à 1 g/l à 25°C,
les données en pourcentage se rapportant à la somme des constituants a) à d),
puis neutralisation et/ou quaternisation, comme liants de pigments.

2. Utilisation selon la revendication 1, dans laquelle les polymères peuvent être obtenus par polymérisation de
10 à 50 % en masse de a),
5 à 60 % en masse de b),
0 à 50 % en masse de c) et
3 à 30 % en masse de d).

3. Utilisation selon la revendication 1, dans laquelle les polymères peuvent être obtenus par polymérisation de 10 à 60 % en masse de a) et 40 à 90 % en masse de b).

4. Utilisation selon la revendication 1, dans laquelle les polymères peuvent être obtenus par polymérisation de
5 à 60 % en masse de a),
5 à 70 % en masse de b) et
5 à 50 % en masse de c), les monomères c) contenant au moins 8 atomes de carbone dans le reste alcool.

5. Utilisation selon la revendication 1, dans laquelle les polymères peuvent être obtenus par polymérisation de
5 à 60 % en masse de a),
10 à 70 % en masse de b) et
3 à 30 % en masse de d).
